**Europäisches Patentamt**

**European Patent Office**

**Office européen des brevets**

(19)

(11) Veröffentlichungsnummer: **0 262 295**
**A1**

(12) # EUROPÄISCHE PATENTANMELDUNG

(21) Anmeldenummer: **87106607.2**

(22) Anmeldetag: **07.05.87**

(51) Int. Cl.4 **F02G 5/02** , F02B 41/10 , F01K 23/06 , F01K 23/14

(30) Priorität: **29.08.86 DE 3629494**

(43) Veröffentlichungstag der Anmeldung: **06.04.88 Patentblatt 88/14**

(84) Benannte Vertragsstaaten: **AT DE ES FR GB IT NL SE**

(71) Anmelder: **Dr.Ing.h.c. F. Porsche Aktiengesellschaft Porschestrasse 42 D-7000 Stuttgart 40(DE)**

(72) Erfinder: **Striebich, Helmut, Dipl.-Ing. Max-Beckmann-Strasse 25 D-7500 Karlsruhe 41(DE)**

(54) **Abwärmeturbineneinheit.**

(57) Diese Abwärmeturbineneineheit (3) ist mit einem rotierenden, als Hohlkörper ausgebildeten Zylinder (11, 11') versehen, der an seiner Außenseite eine Beschaufelung (26) trägt. Letztere ist den Abgasen einer Brennkraftmaschine (2) ausgesetzt, die Bestandteil eines Antriebsaggregats (1), insbesondere für Kraftfahrzeuge ist.

Die Beschaufelung (26), die sich benachbart von Abgasleitungen (30) der Brennkraftmaschine (2) erstreckt, verläuft spiralförmig entlang des Zylinders (11, 11').

Dadurch wird zum einen die Festigkeit des Zylinders (11, 11') erhöht, zum anderen wird der Wärmeübergang von der Außenseite zur Innenseite des Zylinders (11, 11') optimiert, wodurch die Energienutzung verbessert wird.

FIG.2

EP 0 262 295 A1

## Abwärmeturbineneinheit

Die Erfindung betrifft eine Abwärmeturbineneinheit mit einem rotierenden, als Hohlkörper ausgebildeten Zylinder, dessen Außenseite eine Beschaufelung aufweist, die Abgasen einer Bestandteil eines Antriebsaggregats, insbesondere für Kraftfahrzeuge bildenden Brennkraftmaschine ausgesetzt ist.

Eine bekannte Abwärmeturbineneinheit (DE-PS 33 26 992) umfaßt einen rotierenden Zylinder, dessen grundsätzliche Auslegung bereits dazu beiträgt, daß die Abgasenergienutzung in der besagten Turbineneinheit gut ist.

Dennoch ist es Aufgabe der vorliegenden Erfindung, den Zylinder weiterzuentwickeln, derart, daß sowohl seine bauliche Gestaltung wie auch die Wirkung der Abwärmeturbineneinheit verbessert wird.

Erfindungsgemäß wird dies durch die kennzeichnenden Merkmale des Anspruchs 1 gelöst. Weitere, die Erfindung ausgestaltende Merkmale enthalten die Unteransprüche.

Die mit Erfindung hauptsächlich erzielten Vorteile sind darin zu sehen, daß die spiralförmige Beschaufelung einen optimierten Wärmeübergang von der Außenseite an die Innenseite des Zylinders und damit eine noch bessere Energienutzung sicherstellt. Auch ist durch besagte Beschaufelung der Zylinder mit einer höheren Festigkeit versehen.

In der Zeichnung werden Ausführungsbeispiele der Erfindung gezeigt, die nachstehend näher beschrieben sind.

Es zeigt

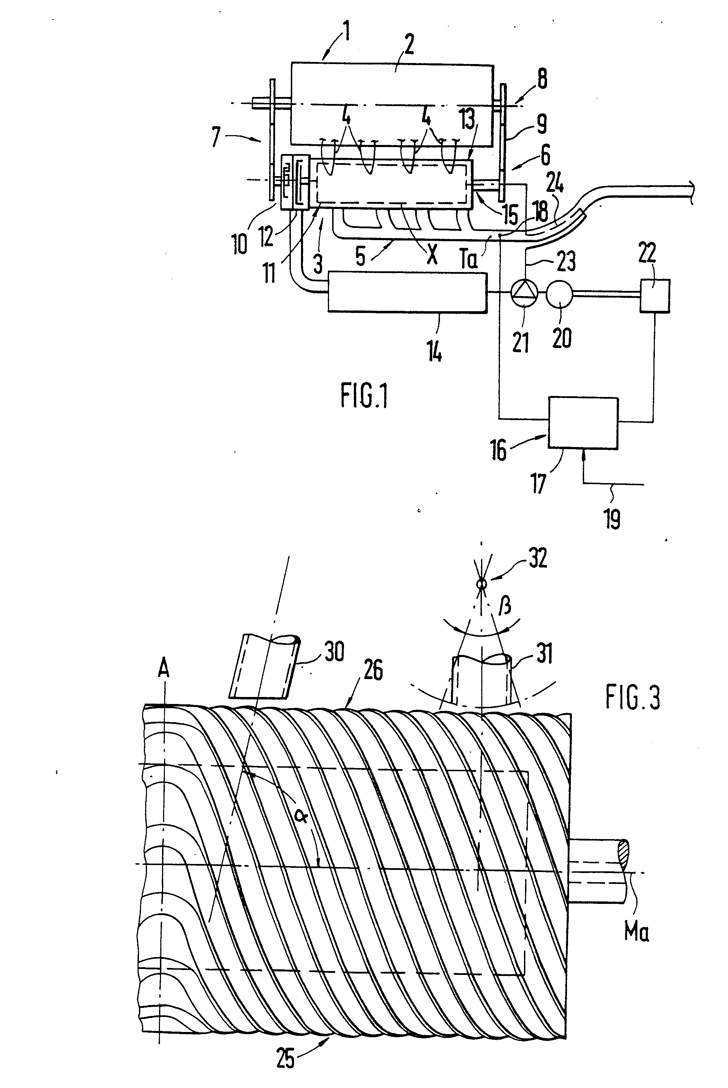

Fig. 1 ein Blockschaltbild eines Antriebsaggregats mit der erfindungsgemäßen Abwärmeturbineneinheit,

Fig. 2 eine Einzelheit X der Fig. 1 in größerem Maßstab,

Fig. 3 eine Teilansicht der Fig. 2 mit einer anderen Ausführungsform,

Fig. 4 einen Schnitt nach der Linie IV-IV der Fig. 2,

Fig. 5 einen Schnitt entsprechend Fig. 4 mit einer anderen Ausführungsform.

Das Antriebsaggregat 1, das in ein Kraftfahrzeug eingebaut sein kann oder aber im stationären Betrieb - Energieversorgung - arbeitet, umfaßt eine Brennkraftmaschine 2 und eine Abwärmeturbineneinheit 3. Die Abwärmeturbineneinheit 3 ist an Auslaßkanäle 4 der Brennkraftmaschine 2 angeschlossen. Sie wird also von Abgasen der mehrzylindrigen Brennkraftmaschine - sie besitzt vier Zylinder - beaufschlagt. Mit 5 ist eine Abgasleitung bezeichnet, die der Abwärmeturbineneinheit 3 nachgeschaltet ist.

Die Abwärmeturbineneinheit 3 dient zur Nutzung der dem Abgas der Brennkraftmaschine innewohnenden Energien, wobei die gewonnene Leitung - sie kann zur Leistungssteigerung und/oder zur Verbrauchsreduzierung der Brennkraftmaschine 2 eingesetzt werden - bei 6 und 7, vorzugsweise der Kurbelwelle 8 zugeführt wird. Zwischen Kurbelwelle 8 und Abwärmeturbineneinheit 3 sind bei 9 und 10 Getriebe vorgesehen.

Die Abwärmeturbineneinheit 3 umfaßt einen rotierenden, als Hohlkörper mit kreisrundem Querschnitt ausgebildeten Zylinder 11 und eine diesem nachgeschaltete Dampfturbineneinheit 12, die in einem Gehäuse 13 angeordnet sind, wobei der Dampfturbineneinheit 12 ein Kondensator 14 nachgeschaltet ist. Mit einer Einrichtung 15 wird dem Zylinder 11 flüssiges Medium zugeführt, das verdampft und unter Leistungsabgabe in der Dampfturbine 12 expandiert. Das Flüssige Medium kann dem Kühlmittel der Brennkraftmaschine entnommen werden. Bezüglich weiterer Einzelheiten der Abwärmeturbineneinheit, insbesondere aber des Zylinders 11, wird auf die DE-PS 33 26 992 verwiesen.

Die Einrichtung 15 wirkt mit einer Regelvorrichtung 16 zusammen. Diese besitzt ein Regelgerät 17, das mit einem Temperaturfühler 18 (Istwertgeber Ta) in der Abgasleitung 5 und einem Sollwertgeber 19 der vom nicht gezeigten Leistungsregelorgan der Brennkraftmaschine bestimmt wird, verbunden ist. Das Regelgerät 17 ist ferner an einen Elektromotor 20 einer Pumpe 21 unter Zwischenschaltung eines Spannungsreglers 22 angeschlossen.

Von der Pumpe 21 führt eine Leitung 23 flüssiges Medium zur Einrightung 15. Die Leitung 23 verläuft bei 24 innerhalb der Abgasleitung 5, d. h., sie wird örtlich vom Abgas umströmt wodurch das Medium vorgewärmt wird.

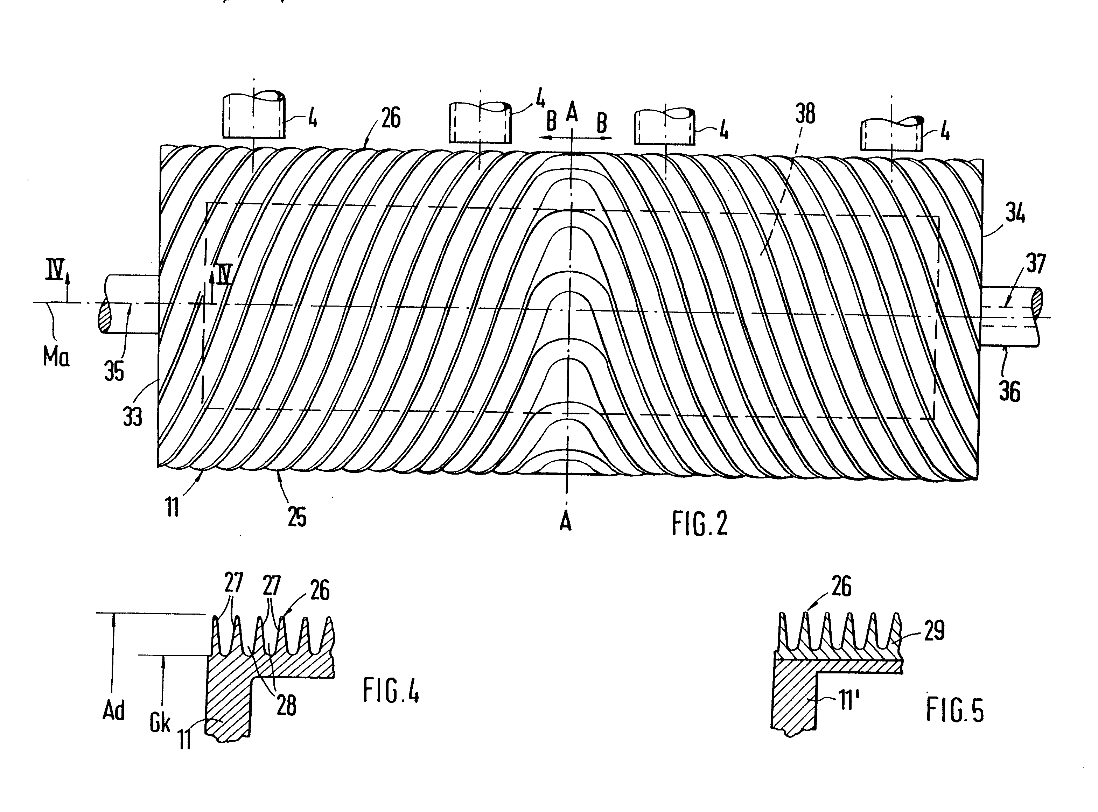

Der Zylinder 11, der aus einer Leichtmetall-Legierung besteht, weist an seiner Außenseite 25 eine Beschaufelung 26 auf. Letztere wird durch beabstandete Rippen 27 gebildet (Fig. 4), die sich spiralförmig über vorzugsweise die gesamte Länge des Zylinders 11 erstrecken. Die Rippen 27 verjüngen sich keilartig von einem Grundkreis Gk aus bis zu einem Außendurchmesser Ad. Grundkreis Gk und Außendurchmesser Ad haben eine gemeinsame Mittellängsachse Ma; sie ist auch die Mittellängsachse des Zylinders 11. Die Rippen 27 werden durch Ausfräsungen 28 gebildet. Die Auslegung der Steigung der spiralförmigen Beschaufelung 26 wie auch die Form der Rippen 27 und der Ausfräsungen 28 kann rechnerisch und/oder empirisch ermittelt werden.

Gemäß Fig. 4 ist die Beschaufelung 26 aus einem Stück mit dem Zylinder 11 hergestellt. Sie kann aber auch, wie Fig. 5 zeigt, ein Bauteil 29 sein, das getrennt vom Sylinder 11' hergestellt ist. Das Bauteil 29 ist form-und/oder kraftschlüssig - gegebenenfalls auch stoffschlüssig - mit dem Zylinder 11' verbunden.

Die spiralförmige Beschaufelung 26 ist so am Zylinder 11, 11' angelegt, daß sie von einer Mittelquerebene A-A des Zylinders 11 aus spiegelbildlich nach außen - in Längsrichtung B-B des Zylinders - hin verläuft.

Die Abgasleitungen 5 sind in Fig. 2 rechtwinkelig zur Mittellängsachse Ma ausgerichtet. Sie können aber auch stumpfwinkelig - Winkel $\alpha$ -sur Mittel-längsachse Ma angeordnet sein, was in Fig. 3 mit der Abgasleitung 30 dargestellt ist. Darüber hinaus besteht die Möglichkeit, die Abgasleitung 31 in Abhängigkeit der Drehzahl des Zylinder 11 (11') oder eines anderen geeigneten Parameters zu verstellen, und zwar im Bereich Winkel $\beta$ . Zu diesem Zweck ist die Abgasleitung bei 32 schwenkbar gelagert, was lediglich schematisch dargestellt ist.

Der Zylinder 11 (11') weist an seinen Stirnseiten 33, 34 Lagerwellen 35, 36 auf, mit denen er im Gehäuse 13 gelagert ist. Die Lagerwelle 36 ist mit einer Bohrung 37 versehen, über die flüssiges Medium in einen Hohlraum 38 des Zylinders 11 (11')-gefördert wird.

## Ansprüche

1. Abwärmeturbineneinheit mit einem rotierenden, als Hohlkörper ausgebildeten Zylinder, dessen Außenseite eine Beschaufelung aufweist, die Abgasen einer Bestandteil eines Antriebsaggregats, insbesondere für Kraftfahrzeuge bildenden Brennkraftmaschine ausgesetzt ist, dadurch gekennzeichnet, daß die benachbart von Abgasleitungen (4; 30; 31) der vorzugsweise mehrzylindrigen Brennkraftmaschine (2) sich erstreckende Beschaufelung (26) spiralförmig am Umfang und über einen wesentlichen Teilbereich der Länge des Zylinders (11, 11') verläuft.

2. Abwärmeturbineneinheit nach Anspruch 1, dadurch gekennzeichnet, daß sich die spiralförmige Beschaufelung (26) über die gesamte Länge des Zylinders (11, 11') erstreckt.

3. Abwärmeturbineneinheit nach Anspruch 2, dadurch gekennzeichnet, daß die spiralförmige Beschaufelung (26) von einer Mittelquerebene (A-A) des Zylinders (11, 11') aus spiegelbildlich nach außen hin verläuft.

4. Abwärmeturbineneinheit nach den Ansprüchen 1 bis 3, dadurch gekennzeichnet, daß die Beschaufelung (26) aus einem Stück mit dem Zylinder (11) hergestellt ist.

5. Abwärmeturbineneinheit nach den Ansprüchen 1 bis 4, dadurch gekennzeichnet, daß die Beschaufelung (26) durch ein Bauteil (29) gebildet wird, das getrennt von dem Zylinder (11') hergestellt ist.

6. Abwärmeturbineneinheit nach Anspruch 1, dadurch gekennzeichnet, daß die Abgasleitungen (4) im rechten Winkel zur Längsmittelachse (Ma) des Zylinders (11) verläuft.

7. Abwärmeturbineneinheit nach Anspruch 1, durch gekennzeichnet, daß die Abgasleitungen (30) stumpfwinkelig (Winkel $\alpha$) zur Längsmittelachse (Ma) des Zylinders (11) verläuft.

8. Abwärmeturbineneinheit nach Anspruch 1, dadurch gekennzeichnet, daß der Anstellwinkel der Abgasleitungen (31) relativ zur Beschaufelung (26) in Abhängigkeit der Drehzahl des Zylinders (11, 11') verstellbar ist.

9. Abwärmeturbineneinheit nach Anspruch 1, dadurch gekennzeichnet, daß die Beschaufelung (26) - im Querschnitt gesehen - durch beabstandete Rippen (27) gebildet wird.

10. Abwärmeturbineneinheit nach Anspruch 9, dadurch gekennzeichnet, daß sich die Rippen (27) von einem Grundkreis (Bk) aus bis zu einem Außendurchmesser (Ad) hin keilförmig verjüngen.

FIG.1

FIG.3

FIG.2

FIG.4

FIG.5

0 262 295

AB 26₂

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-C-3 326 992 (PORSCHE)<br>* Insgesamt *<br>--- | 1 | F 02 G 5/02<br>F 02 B 41/10<br>F 01 K 23/06<br>F 01 K 23/14 |
| A | DE-A-2 757 236 (PORSCHE)<br>* Seite 6, Zeile 25 - Seite 7, Zeile 22; Figur 4 *<br>--- | 1 | |
| A | CH-A- 168 230 (BÜCHI)<br>* Seite 1, Spalte 2, Zeile 12 - Seite 2, Spalte 1; Figuren 1-8 *<br>--- | 1 | |
| A | US-A-3 609 058 (TARSOLY)<br>* Zusammenfassung; Figuren 1,2 *<br>--- | 2-6,9, 10 | |
| A | US-A-2 592 227 (YEOMANS)<br>* Spalte 3, Zeile 75 - Spalte 4, Zeile 60; Figuren 5,6 *<br>--- | 1 | |
| A | US-A-2 436 246 (BRAGA)<br>* Spalte 2, Zeilen 1-25; Figur 1 *<br>--- | 1 | |
| A | FR-A- 797 080 (STRAZZULLA)<br>* Figur 1 *<br>--- | 2-4 | RECHERCHIERTE SACHGEBIETE (Int. Cl.4)<br><br>F 02 G |
| A | FR-A- 673 932 (SCHWALLER)<br>* Seite 1, Zeile 44 - Seite 2, Zeile 26; Figuren *<br>--- | 2-4,7,8 | F 02 B<br>F 01 D<br>F 01 K<br>F 02 C |
| A | US-A-3 242 665 (FLATER)<br>* Figuren 16,18 *<br>--- | 7,8 | |
| A | US-A-2 283 176 (BIRMANN)<br>--- | | |
| A | FR-A- 709 814 (DREHER)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 26-11-1987 | ERNST J.L. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes
    Dokument

EPO FORM 1503 03.82 (P0403)